# EUROPEAN PATENT SPECIFICATION

(11) **EP 2 284 697 B1**
(45) Date of publication and mention of the grant of the patent: **04.09.2019**
(21) Application number: 10171198.4
(22) Date of filing: 29.07.2010
(51) Int. Cl.: G06F 9/451, G06F 3/0482

(54) **Stereoscopic display device and display method**
Stereoskopische Anzeigevorrichtung und Anzeigeverfahren
Affichage stéréoscopique et procédé d'affichage

(30) Priority: 05.08.2009 JP 2009182582
(43) Date of publication of application: 16.02.2011
(73) Proprietor: Saturn Licensing LLC, New York, NY 10022-3211 (US)
(72) Inventor: Kitayama, Takefumi, TOKYO 108-0075 (JP)
(74) Representative: Beder, Jens

(56) References cited:
- US-A1- 2003 084 445
- US-A1- 2009 089 834

## Description

### BACKGROUND OF THE INVENTION

### Field of the Invention

The present invention relates to a display device, and a display method.

### Description of the Related Art

In recent years, a GUI (Graphical User Interface) is widely used to operate a television, a personal computer and the like. The GUI displays operation menus, a program guide, a content list and the like on a screen and enables to select an item on the displayed image, and a user can operate, via the GUI, a television, a recording/reproducing apparatus, a game machine and the like connected to the television.

Meanwhile, there is being developed a stereoscopic display device such as a television, a display and the like that enables a user to stereoscopically view an object on a display screen on which a video content such as a broadcast program, a motion picture, a game and the like is displayed, as if an object displayed on the screen is popping out of the screen in 3-D.

### SUMMARY

Meanwhile, an existing GUI is designed to be displayed by a display device that could only display in two dimensions, and the GUI was displayed two-dimensionally on the screen. Thus, it was sometimes hard, depending on a viewer, to grasp where a selectable item on the GUI was on the screen. Also, since, according to a method of expression based on two dimensions, expression variations were limited compared to a case of three dimensions, and an item displayed as a GUI was sometimes hard for a viewer to intuitively perceive. Furthermore, even if each item was expressed stereoscopically on a two-dimensional plane, it was actually
drawn in two dimensions, and thus, there was a drawback that there was a part hidden by an object and information of the GUI in the hidden part was hard to see.

US 2003/0084445 A1 discloses an electronic program guide (EPG), which includes an enhanced program listing for at least one of the program listings of the EPG.

US 2009/0089834 A1 discloses a 3D electronic program guide, which is displayed in a 3D rendered landscape.

In light of the foregoing, it is desirable to provide a display device and a display method which are novel and improved, and which are capable of displaying an interface which can be easily perceived by any user on a screen capable of displaying a stereoscopic image..

A first aspect of the invention, concerns a display control device for controlling a display of a graphical user interface (GUI). The graphical user interface comprises a plurality of user selectable and user non-selectable items, the items being each displayed on a portion of the graphical user interface on a screen of a display panel. The display control device comprises an image generation unit configured to generate an image as a stereoscopic image to be displayed on the screen of the display panel based on data relating to a picture, wherein the data relating to a picture includes data relating to the graphical user interface.
The display control device further comprises a pop-out amount unit configured to calculate a pop-out amount of the stereoscopic image, the pop-out amount indicating a perceived distance that at least the portion of the graphical user interface in the stereoscopic image pops out into space from the screen of the display panel based on a specific parameter of the portion of the graphical user interface. The specific parameter is set based on whether the portion of the graphical user interface is a user selectable portion or a user non-selectable portion. The pop-out amount unit is configured to calculate the pop-out amount for the user selectable portion to be greater than for a user non-selectable portion. A display controller of the display control device is configured to control display of the stereoscopic image based on the calculated pop-out amount on the display panel.

According to a further aspect of the invention, the GUI is an electronic program guide (EPG).

According to a further aspect of the invention, the specific parameter is set based on whether the portion of the GUI is selected by a user input, and the pop-out amount unit calculates a pop-out amount for the selected portion of the GUI to be greater than for a non-selected portion.

According to a further aspect of the invention, the stereoscopic image displays a plurality of file folders, wherein the specific parameter is set based on a number of data pieces within the file folders, and the pop-out amount unit calculates the pop-out amount corresponding to the number of data pieces in the respective file folders.

According to a further aspect of the invention, the specific parameter is set based on a degree of interest in the portion of the GUI, and the pop-out amount unit calculates the pop-out amount corresponding to the degree of interest in the portion of the GUI.

According to a further aspect of the invention, the specific parameter is set based on a degree of public attention in the portion of the GUI. The degree of interest is a preference value. The pop-out amount unit calculates the pop-out amount corresponding to the degree of public attention in the portion of the GUI.

According to an aspect of the invention, tThe degree of public interest is determined by utilizing a word ranking in a search.

According to a further aspect of the invention, the specific parameter is set based on a length of time remaining in a content selectable in the GUI, and the pop-out amount unit calculates the pop-out amount corresponding to the length of the time remaining in the content.

According to an further aspect of the invention, the specific parameter is set based on an elapsed time from a start of reproduction of a content selectable in the GUI, and the pop-out amount unit calculates the pop-out amount corresponding to the elapsed time from the start of reproduction of the content.

According to a further aspect of the invention, the specific parameter is set based on a time until a start of recording of a recording target in the GUI, and the pop-out amount unit calculates the pop-out amount corresponding to the time until the start of recording of the recording target in the GUI.

A further aspect of the invention concerns a display control method
for controlling a display of a graphical user interface. The graphical user interface comprises a plurality of user selectable and user non-selectable items, the items being each displayed on a portion of the graphical user interface on a screen of a display panel. The display control method comprises generating an image as stereoscopic image to be displayed on the screen of the display panel based on data relating to a picture, wherein the data relating to a picture includes data relating to the graphical user interface. The display control method is characterized in further comprising a step of calculating a pop-out amount of the stereoscopic image. The pop-out amount indicates a perceived distance that at least the portion of the graphical user interface in the stereoscopic image pops out into space from the screen of the display panel based on a specific parameter of the portion of the graphical user interface. The specific parameter is set based on whether the portion of the graphical user interface is a user selectable portion or a user non-selectable portion. The step of calculating a pop-out amount calculates a pop-out amount for a user selectable portion to be greater than for a user non-selectable portion. The method comprises further a step of controlling display of the stereoscopic image based on the calculated pop-out amount on the display panel.

According to a further aspect of the invention, the GUI is an electronic program guide (EPG).

According to a further aspect of the invention, the specific parameter is set based on whether the portion of the GUI is selected by a user input, and the calculating a pop-out amount calculates a pop-out amount for the selected portion of the GUI to be greater than for a non-selected portion.

According to a further aspect of the invention, the stereoscopic image displays a plurality of file folders, and the specific parameter is set based on a number of data pieces within the file folders, and the calculating a pop-out amount calculates the pop-out amount corresponding to the number of data pieces in the respective file folders.

According to a further aspect of the invention, the specific parameter is set based on a degree of interest in the portion of the GUI. The degree of interest is a preference value. The calculating a pop-out amount calculates the pop-out amount corresponding to the degree of interest in the portion of the GUI.

According to an aspect, the specific parameter is set based on a degree of public attention in the portion of the GUI, and the calculating a pop-out amount calculates the pop-out amount corresponding to the degree of public attention in the portion of the GUI.

According to an aspect, the degree of public interest is determined by utilizing a word ranking in a search.

According to an aspect of the invention, the specific parameter is set based on a length of time remaining in a content selectable in the GUI, and the
calculating a pop-out amount calculates the pop-out amount corresponding to the length of the time remaining in the content.

According to an aspect, the specific parameter is set based on an elapsed time from a start of reproduction of a content selectable in the GUI, and the calculating a pop-out amount calculates the pop-out amount corresponding to the elapsed time from the start of reproduction of the content.

According to an aspect, the specific parameter is set based on a time until a start of recording of a recording target in the GUI, and the calculating a pop-out amount calculates the pop-out amount corresponding to the time until the start of recording of the recording target in the GUI.

### BRIEF DESCRIPTION OF THE DRAWINGS

FIG. 1 is a block diagram showing a configuration of a display device 100 according to an exemplary embodiment of the present invention;
FIG. 2 is an explanatory diagram showing a screen 201 on which a setting menu is displayed by applying the exemplary embodiment;
FIG. 3 is an explanatory diagram showing a screen 211 on which a selection menu is displayed by applying the exemplary embodiment;
FIGS. 4A and 4B are explanatory diagrams showing a screen 221 on which a content selection menu 222 is displayed by applying the exemplary embodiment;
FIGS. 5A and 5B are explanatory diagrams showing a screen 231 on which a content selection menu 232 is displayed by applying the exemplary embodiment;
FIG. 6 is an explanatory diagram showing a screen 241 on which a program guide 242 is displayed by applying the exemplary embodiment;
FIGS. 7A and 7B are explanatory diagrams showing a screen 251 on which a content selection menu 252 is displayed by applying the exemplary embodiment;
FIG. 8 is an explanatory diagram showing a screen 261 on which a content selection menu 262 is displayed by applying the exemplary embodiment;
FIG. 9 is an explanatory diagram showing a screen 271 on which a clip message 272-1 or 272-2 is displayed by applying the exemplary embodiment;
FIG. 10 is a flow chart showing an operation of pop-out displaying a position to which a focus is set;
FIG. 11 is a flow chart showing an operation of pop-out displaying a selectable item;
FIG. 12 is a flow chart showing an operation of changing, according to the number of pieces of file data included in a directory in a file system, pop-out display of a folder image representing the directory;
FIG. 13 is a flow chart showing an operation of changing a pop-out display of an image representing an individual broadcast program in a program guide, according to a degree of interest (preference value) of a user for a content;
FIG. 14 is a flow chart showing an operation of changing a pop-out display of an image representing a content according to its place in a search ranking;
FIG. 15 is a flow chart showing an operation of changing a pop-out display of an image representing a content according to an appearance frequency of a word included in program information;
FIG. 16 is a flow chart showing an operation of changing a pop-out display of an image representing a content according to a time length of the content;
FIG. 17 is a flow chart showing an operation of changing a pop-out display of an image representing a content according to an elapsed time from a start of reproduction of the content or a start of broadcast thereof;
FIG. 18 is a flow chart showing an operation of changing a pop-out display of an image indicating a start of recording of a content according to a time until a start of recoding of a recording target content;
FIG. 19 is an explanatory diagram showing a screen 11 on which an existing setting menu is displayed;
FIG. 20 is a flow chart showing a process of design according to Color Universal Design;
FIG. 21 is an explanatory diagram showing a screen 21 on which an existing selection menu is displayed;
FIG. 22 is an explanatory diagram showing screens 31, 32 and 33 on which an existing file selection menu is displayed;
FIG. 23 is an explanatory diagram showing an existing screen 41 on which a list of programs which are of interest to a viewer are displayed;
FIG. 24 is an explanatory diagram showing a screen 51 on which an existing program guide 52 is displayed;
FIG. 25 is an explanatory diagram showing a screen 61 on which an existing program guide 62 is displayed;
FIG. 26 is an explanatory diagram showing a screen 71 on which a content selection menu is displayed; and
FIG. 27 is an explanatory diagram showing a screen 81 on which a clip message 82 is displayed by applying the exemplary embodiment.

### DETAILED DESCRIPTION OF EXEMPLARY EMBODIMENT(S)

Hereinafter, exemplary embodiments of the present invention will be described in detail with reference to the appended drawings. In this specification and the appended drawings, structural elements that have substantially the same function and structure are denoted with the same reference numerals, and repeated explanation of these structural elements is omitted.

Additionally, the explanation will be given in the order shown below.
1. Configuration of an exemplary Embodiment
2. Examples of aspects of a GUI of the exemplary Embodiment

### <1. Exemplary Embodiment

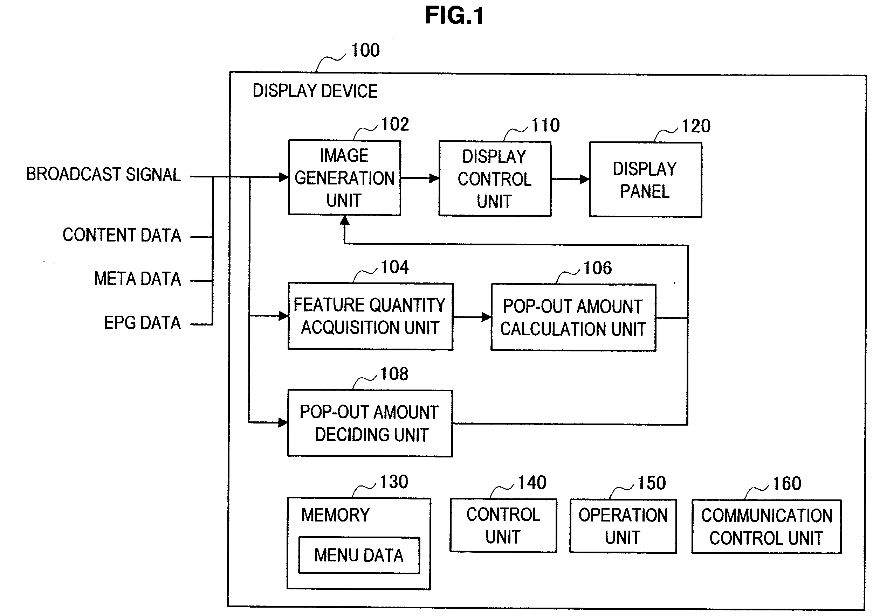

First, a configuration of a display device 100 according to an exemplary embodiment of the present invention will be described with reference to FIG. 1. FIG. 1 is a block diagram showing a configuration of the display device 100 according to the present exemplary embodiment.

The display device 100 includes an image generation unit 102, a feature quantity acquisition unit 104, a pop-out amount calculation unit 106, a pop-out amount deciding unit 108, a display control unit 110, a display panel 120, a memory 130, a control unit 140, an operation unit 150, and a communication control unit 160, for example.

The display device 100 is a liquid crystal display device, a plasma display device, an organic EL display device, or the like. The display device 100 is a stereoscopic display device, and enables a user to stereoscopically view an object on a display screen on which a video content such as a broadcast program, a motion picture, a game and the like is displayed, as if an object displayed on the screen is popping out of the screen in 3-D (three-dimensions). An ordinarily used method can be applied for enabling the stereoscopic view, and an explanation thereof will be omitted in this specification.

The image generation unit 102 generates a stereoscopic image based on data relating to a picture that is to be displayed on a screen. The data relating to a picture that is to be displayed on a screen is broadcast data, motion picture data, video data, or the like. The data relating to a picture that is to be displayed on a screen may also include data relating to a GUI, such as a menu screen.

The feature quantity acquisition unit 104 acquires a feature quantity relating to an image in a specific area included in the picture. The image in a specific area is a folder image representing a directory that includes file data, an icon image representing a content, the area of a program on a program guide, a recording start message, or the like. The feature quantity is the number of pieces of file data included in a directory, a preference value or a degree of attention of one or more viewers on a content, the time length of a content, the elapsed time from the start of reproduction of a content or the start of broadcast thereof, the time until the start of recording of a content, or the like.

The pop-out amount calculation unit 106 calculates, based on the feature quantity, a pop-out amount relating to a distance of an image in a specific area that is viewed, on a stereoscopic image, popping out into space from a screen.

The pop-out amount deciding unit 108 decides a pop-out amount relating to a distance of an image that is viewed, on a stereoscopic image, popping out into space from a screen, the image being an image in an area of an item selected among a plurality of items included in a picture or an image in an area that can be selected by a user.

The display control unit 110 displays a stereoscopic image on a screen such that an image in a specific area is viewed as if it is popping out, based on the pop-out amount.

The display panel 120 displays a picture on a screen according to a drive signal or the like from the image generation unit 102. The display panel 120 is a liquid crystal display panel, a plasma display panel, an organic EL display panel, or the like. The memory 130 stores data relating to a picture, data relating to a menu, a program to be executed by the control unit 140, and the like. The control unit 140 is a CPU, for example, and operates various functional blocks provided in the display device 100, or performs various arithmetic processing.

The operation unit 150 receives an operation by a user and outputs an operation signal. The processing by the display device 100 is started or stopped based on the operation signal. Also, operation on a GUI displayed on a screen can be realized via the operation unit 150.

The communication control unit 160 receives a broadcast signal, for example, or is connected to a recording/reproducing apparatus and receives a video signal or the like. Furthermore, the communication control unit 160 is connected to the Internet and receives/transmits information such as a video signal.

### <2. Examples of aspects of a GUI of the Exemplary Embodiment

Next, an explanation will be given on examples of aspects of a GUI displayed by utilizing the display device and applying a display method according to the present exemplary embodiment.

A first aspect is an example of a GUI that pop-out displays a position to which a focus is set.

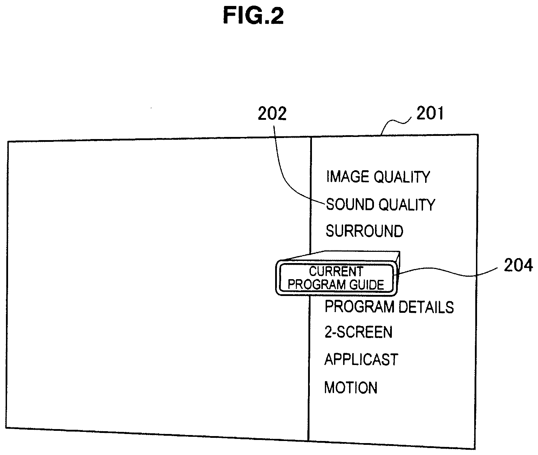

FIG. 2 is an explanatory diagram showing a screen 201 on which a setting menu is displayed by applying the present exemplary embodiment. A plurality of items 202 are displayed in a menu list on the screen 201. The items 202 include, for example, "image quality," "sound quality," "surround," ..., and each item has a characteristic that it can be selected by an operation by a user. The operation by a user is an operation using a remote control, for example, and is realized by the operation unit 150 generating an operation signal. When a certain item 202 is selected, processing of the contents of the item 202 is performed by the display device 100 or the like.

When a plurality of items 202 are displayed, a mark becomes necessary to show that a certain item 202 is selected, to clearly indicate which of the plurality of items 202 is to be executed. In the example shown in FIG. 2, it is clearly indicated that a certain item 204 is selected, by focusing on the item 204 selected among the plurality of items 202. According to an embodiment of the present invention, a display is performed such that only the item 204 which is currently selected and to which a focus has moved is pop-out displayed and other items 202 are not pop-out displayed.

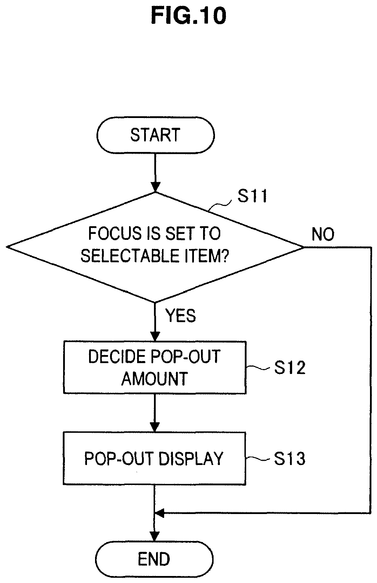

FIG. 10 is a flow chart showing an operation of pop-out displaying a position to which a selection and focus is set. First, it is determined whether a selection is made and a focus is set by an operation by a user to a selectable item 202 (step S11). When it is determined in step S11 that a selection has not been made and a focus is not set to a selectable item 202, NO in step S11, the process ends without pop-out displaying the item 202. On the other hand, when it is determined in step S11 that a selection has been made and a focus is set to a selectable item 202, YES in step S11, a pop-out amount to which extent the area of the item 202 on the screen is to be viewed popping out when displayed is determined (step S12). The pop-out amount may be an amount that is set in advance or may be an amount that is calculated by assessing the state of the screen, for example. Then, a selected item 204 is pop-out displayed as with the item 204 in FIG. 2, based on the pop-out amount (step S13).

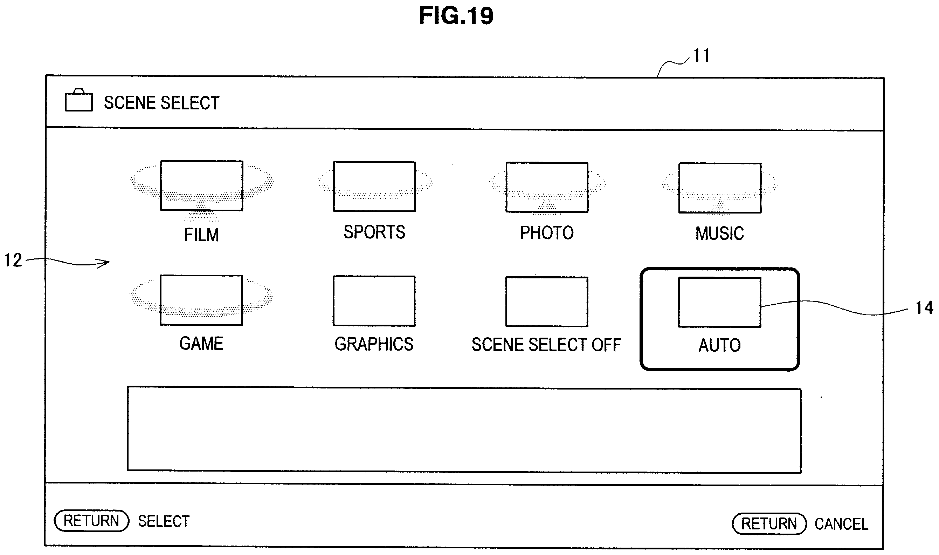

FIG. 19 is an explanatory diagram showing a screen 11 on which a background existing setting menu is displayed. A plurality of items 12 are displayed in a menu list on the screen 11. By making a selection and setting a focus to an item 14 which is selected among the plurality of items 12, it is shown that a certain item 14 is selected. The selected item 14 emphasizes with color that a focus is set thereto, or the item 14 is surrounded by a frame.

However, the existing method has a drawback that a person with difficulty perceiving color as other people do, for example, has difficulty in perceiving the position to which a focus was set. For example, it may be hard to distinguish whether the color was changed due to a focus set thereto, or whether a frame surrounding an item was only a design or whether it indicated that a focus was set thereto.

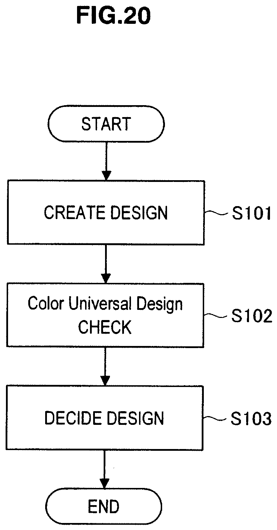

Furthermore, when designing according to Color Universal Design, it becomes necessary to design while checking, by using a tool such as an UDING simulator, whether a correct color is used. Thus, there were many steps in the process of design. FIG. 20 is a flow chart showing the process of design according to Color Universal Design. First, the design of a selectable item and the design of a focused part are created (step S101). Then, it is checked for the created design whether the designed color matches Color Universal Design (step S102). Whether the design created in step S101 is to be adopted is decided based on the check result (step S103).

On the other hand, according to the GUI including the first aspect of the present exemplary embodiment, a user can stereoscopically see the position to which a focus is set, and thus, the user can easily perceive to which item the focus is set. Also, how a focused part is to be displayed does not have to be determined according to Color Universal Design as in the past. Accordingly, the process of step S102 in the flow chart shown in FIG. 20 becomes unnecessary, and design efficiency can be improved.

A second aspect is an example of a GUI that pop-out displays a selectable item.

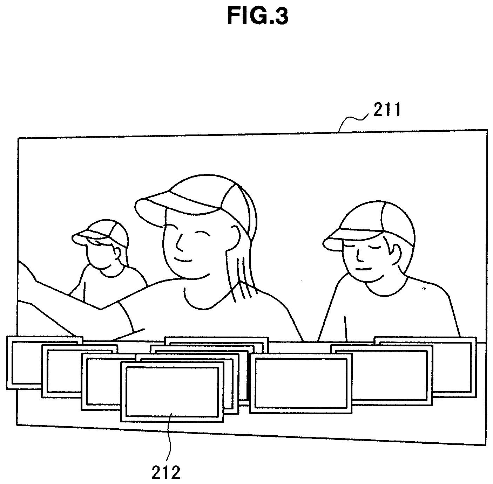

FIG. 3 is an explanatory diagram showing a screen 211 on which a selection menu is displayed by applying the present exemplary embodiment. A plurality of selectable items 212 or unselectable items are shown in the bottom part of the screen 211, and a picture corresponding to a selected item is displayed on the upper part. The items 212 respectively indicate a picture file, for example. Each item has a characteristic of being selectable or unselectable by an operation by a user. When a certain item 212 is selected, processing relating to the item 212 is performed by the display device 100, a recording/reproducing apparatus, or the like.

When a plurality of items 212 are displayed on the screen 211, items that are selectable and items that are unselectable in the current status are sometimes displayed in a mixed manner. According to an exemplary embodiment of the present invention, only the selectable items are pop-out displayed, and the unselectable items are not pop-out displayed.

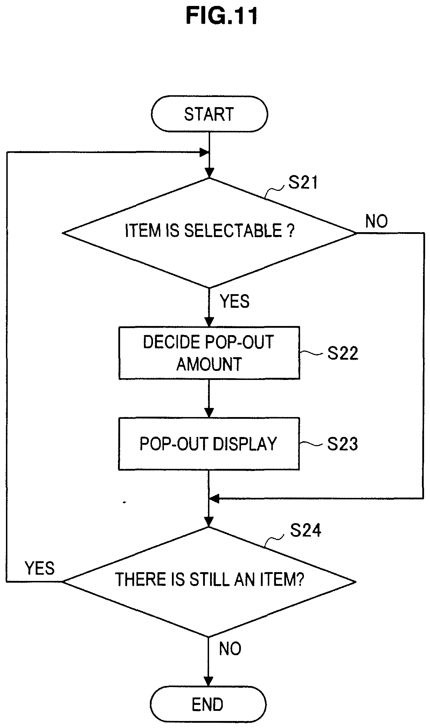

FIG. 11 is a flow chart showing an operation of pop-out displaying a selectable item. First, it is determined whether one of a plurality of items is in a selectable state (step S21). If the item for which determination was made in step S21 is in an unselectable state, NO in step S21, the item is not pop-out displayed, and the process proceeds to step S24. In step S24, it is determined whether there are any other items for which determination is to be made in step S21.

On the other hand, if the item for which determination was made in step S21 is in a selectable state, YES in step S21, a pop-out amount to which extent the area of the item on the screen is to be viewed popping out when displayed is decided (step S22). The pop-out amount may be an amount that is set in advance or may be an amount that is calculated by assessing the state of the screen, for example. Then, the item 212 is pop-out displayed as with the item 212 in FIG. 3, based on the pop-out amount (step S23). Then, the process proceeds to step S24, and it is determined whether there are any other items for which determination is to be made in step S21. When it is determined in step S24 that there is another item for which determination is to be made in step S21, YES in step S21, processes of steps S21 to S23 are repeated for such other item. When it is determined that there is no other item for which determination is to be made in step S21, NO in step S21, the process is ended.

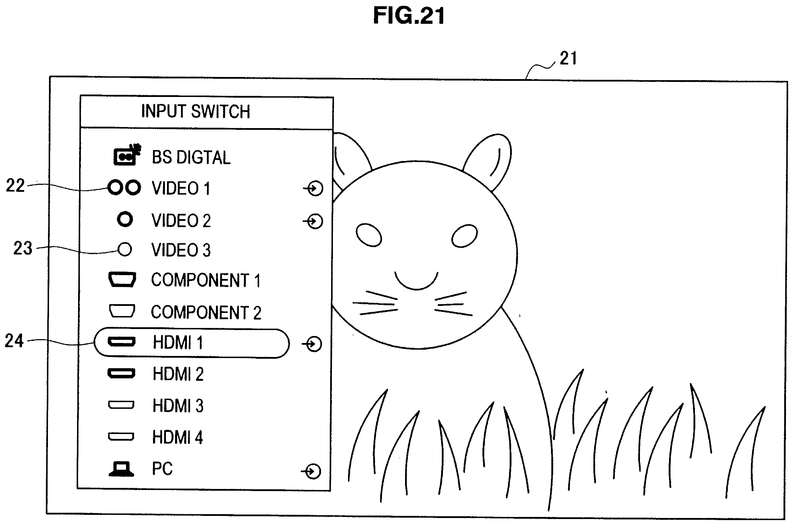

FIG. 21 is an explanatory diagram showing a screen 21 on which a background existing selection menu is displayed. A selectable item 22, an unselectable item 23, and an item 24 to which a focus is set are displayed on the screen 21, and a scene from a video content is displayed in the background. In FIG. 21, the selectable item 22 is displayed with an icon with a thicker line and with slightly larger letters than the unselectable item 23. The unselectable item 23 is sometimes indicated not by the size of letters but by the color of letters being grey or a color other than black.

However, the existing display method has a drawback that, in a case the difference between a selectable item and an unselectable item is small, or in a case a person with difficulty perceiving color as other people do was the viewer, it may be hard to perceive whether a displayed item was in a selectable state or in an unselectable state. Also, similarly to the existing technology explained in relation to Embodiment 1, designing according to Color Universal Design was sometimes necessary.

On the other hand, according to the GUI including the second aspect of the present exemplary embodiment, a user can stereoscopically see a selectable item, and thus, the user can easily perceive which item is in a selectable state. Also, how a focused part is to be displayed does not have to be determined according to Color Universal Design as in the past, and design efficiency can be improved.

A third aspect is an example of a GUI that changes pop-out display of a folder image representing a directory, according to the number of pieces of file data included in the directory in a file system.

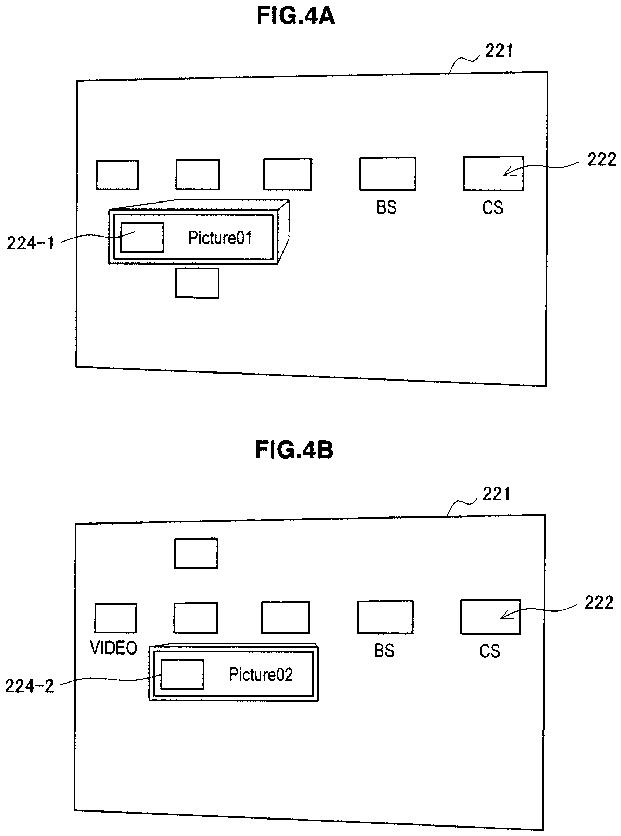

FIGS. 4A and 4B are explanatory diagrams showing a screen 221 on which a content selection menu 222 is displayed by applying the present exemplary embodiment. The selection menu of the screen 221 displays categories in the horizontal direction and displays data included in a selected category in the vertical direction. FIG. 4A shows a state where a folder image 224-1 corresponding to a directory "Picture01" in a category "image" is selected. FIG. 4B shows a state where a folder image 224-2 corresponding to a directory "Picture02" in the category "image" is selected. File data relating to an image content is stored in each directory, for example. By using a folder image, a plurality of contents can be collectively displayed as one group. Categories in the horizontal direction can include, besides "image," "video," "BS-TV," "CS-TV," and the like.

"Picture01" is pop-out displayed in the example shown in FIG. 4A, and "Picture02" is pop-out displayed in the example shown in FIG. 4B. Also, shown is a case where the number of pieces of file data included in the directory "Picture01" (for example, 200) is larger than the number of pieces of file data included in the directory "Picture02" (for example, 10). As a result, the folder image 224-1 representing "Picture01" is popped out more than the folder image 224-2 representing "Picture02." As such, when the number of pieces of file data included in a directory is large, the selected item is greatly popped out, and when the number of pieces of file data is small, the selected item is displayed without being much popped out.

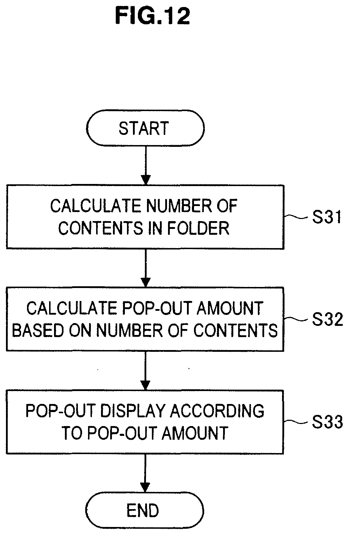

FIG. 12 is a flow chart showing an operation of changing, according to the number of pieces of file data included in a directory in a file system, the pop-out display of a folder image representing the directory. First, the number of contents in a directory corresponding to a folder image selected by an operation by a user is counted and calculated (step S31). Then, based on the calculated number of contents, a pop-out amount to which extent the area of the selected folder image on the screen is to be viewed popping out when displayed is calculated (step S32). Next, a selected item is pop-out displayed as with the items 224-1 and 224-2 in FIGS. 4A and 4B, based on the pop-out amount (step S33).

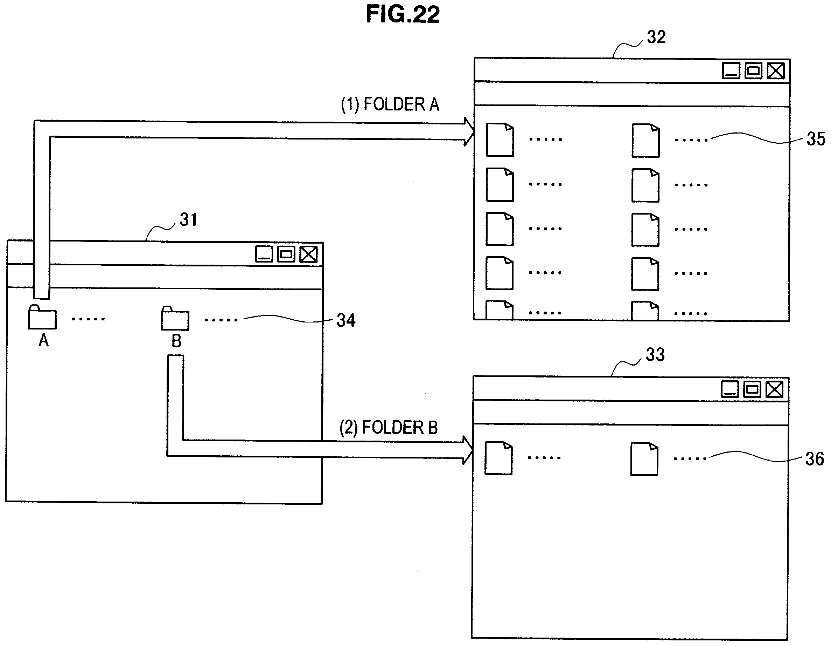

FIG. 22 is an explanatory diagram showing screens 31, 32 and 33 on which a background existing file selection menu is displayed. Two folder images 34 (A and B) are displayed on the screen 31. When the folder image A on the screen 31 is selected to view the contents of the folder image A, the screen 31 shifts to the screen 32 and a plurality of folder images 35 are displayed. As a result, it can be seen that many pieces of file data are included in the directory corresponding to the folder image A. Furthermore, when the folder image B on the screen 31 is selected to view the contents of the folder image B, the screen 31 shifts to the screen 33 and a plurality of folder images 36 are displayed. As a result, it can be seen that a fewer number of pieces of file data are included in the directory corresponding to the folder image B compared to the directory corresponding to the folder image A.

As described, the existing display method has a drawback that it is not possible to check the number of pieces of file data included in a directory unless the contents of the directory were displayed.

On the other hand, according to the GUI including the third aspect of the present exemplary embodiment, when collectively displaying a plurality of contents as one group by using a folder image, the folder image can be displayed with the pop-out amount adjusted according to the number of contents included in the folder. For example, adjustment is made such that the pop-out amount increases as the number of contents increases. As a result, a user can easily grasp the approximate number of contents included in a folder without opening and seeing the contents of the folder.

The third aspect described above can be applied to an example of displaying, on a screen, file data relating to the content of a personal computer or of a recording/reproducing apparatus connected to a television, for example.

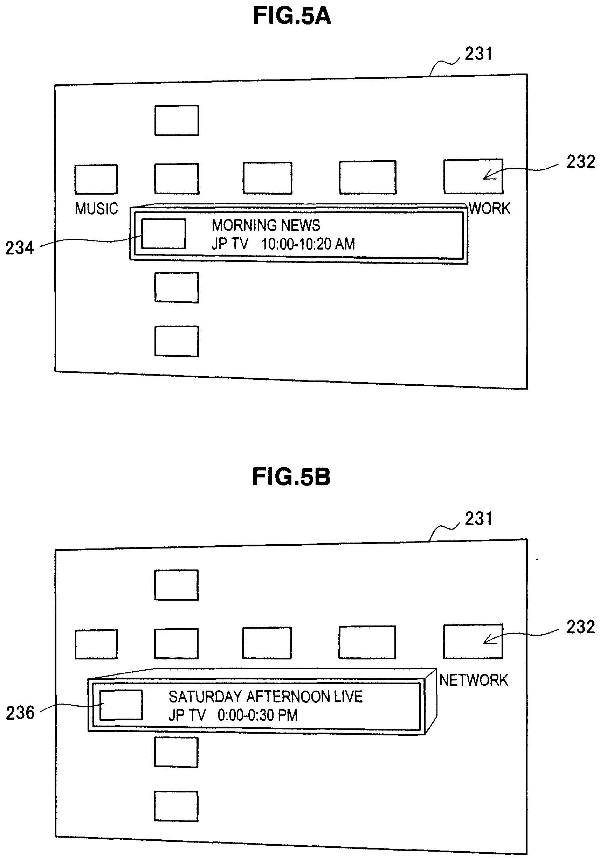

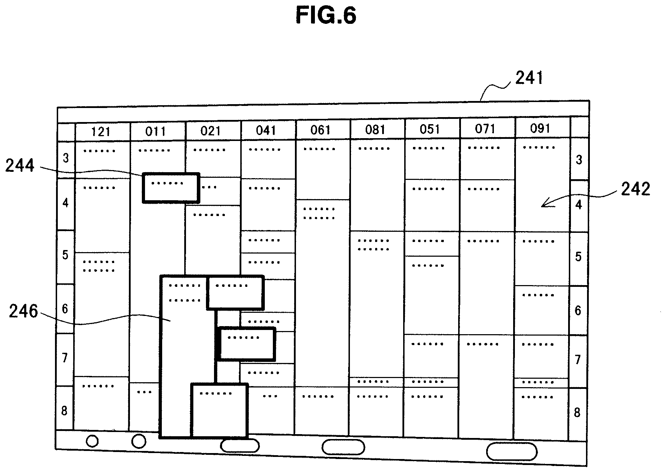

A fourth aspect is an example of a GUI that changes pop-out display of an image representing a content, according to the degree of interest (preference value) of a user for the content. In the following, the content can include a broadcast program, a motion picture, music, and the like. However, in the example of FIGS. 5A, 5B and 6, a case where the content is a broadcast program will be explained.

FIGS. 5A and 5B are explanatory diagrams showing a screen 231 on which a content selection menu 232 is displayed by applying the present exemplary embodiment. The selection menu of the screen 231 displays categories in the horizontal direction and displays data included in a selected category in the vertical direction. FIG. 5A shows a state where a broadcast program 234 included in a category "TV" is selected. FIG. 5B shows a state where a broadcast program 236 included in the category "TV" is selected. When each of the broadcast programs 234 and 236 is selected, the broadcast program can be displayed, or broadcast program data recorded in a recording/reproducing apparatus can be reproduced, or the details of the program can be displayed. Categories in the horizontal direction can include, besides "TV," "music," "network," and the like.

The broadcast program 234 is pop-out displayed in the example shown in FIG. 5A, and the broadcast program 236 is pop-out displayed in the example shown in FIG. 5B. Also, shown is a case where the degree of interest (preference value) of a viewer of the broadcast program 236 is higher than the degree of interest (preference value) of a viewer of the broadcast program 234. As a result, the broadcast program 236 is popped out more than the broadcast program 234. As such, when the preference value for a broadcast program is high, a selected program is greatly popped out, and, on the other hand, when the preference value is low, a selected program is displayed without being much popped out.

Furthermore, FIG. 6 is an explanatory diagram showing a screen 241 on which a program guide 242 is displayed by applying the present exemplary embodiment. The program guide 242 displays channels in the horizontal direction, and displays time in the vertical direction. A plurality of programs are displayed in the program guide 242, and in the example shown in FIG. 6, broadcast programs 244, 246, and the like are pop-out displayed. Also, shown is a case where the degree of interest (preference value) of a viewer of the broadcast program 244 is higher compared to the degree of interest (preference value) of a viewer of the broadcast program 246. As a result, the broadcast program 244 is popped out more than the broadcast program 246. As such, when the preference value for a broadcast program is high, the broadcast program is greatly popped out, and, on the other hand, when the preference value is low, the broadcast program is displayed without being much popped out.

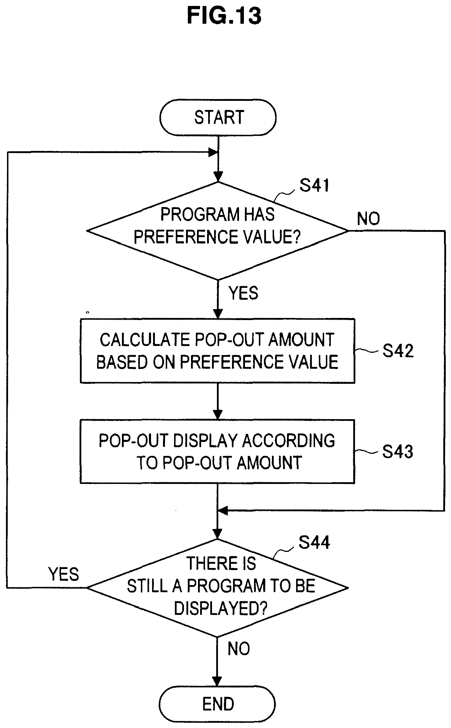

FIG. 13 is a flow chart showing an operation of changing the pop-out display of an image representing a broadcast program in a program guide, according to a degree of interest (preference value) of a user in a content. First, it is determined whether one of a plurality of programs includes a preference value (step S41). If the program for which determination was made in step S41 does not include a preference value, NO in step S41, the item is not pop-out displayed, and the process proceeds to step S44. In step S44, it is determined whether there are any other programs for which determination is to be made in step S41.

On the other hand, if the program for which determination was made in step S41 includes a preference value, YES in step S41, a pop-out amount to which extent the area of the program on the screen is to be viewed popping out when displayed is calculated based on the preference value (step S42). Then, the program is pop-out displayed as with the programs 244 and 246 in FIG. 6 based on the calculated pop-out amount. Then, the process proceeds to step S44, and it is determined whether there are any other programs for which determination is to be made in step S41. When it is determined in step S44 that there is another program for which determination is to be made in step S41, YES in step S44, the processes of steps S41 to 43 are repeated for such other program. When it is determined that there is no other items for which determination is to be made in step S41, NO in step S44, the process is ended.

The preference value for each program can be obtained by analyzing the operation by a user on a television, for example. Additionally, an ordinarily used technology can be used for the calculation of the preference value of each program, and the explanation thereof is omitted in this specification.

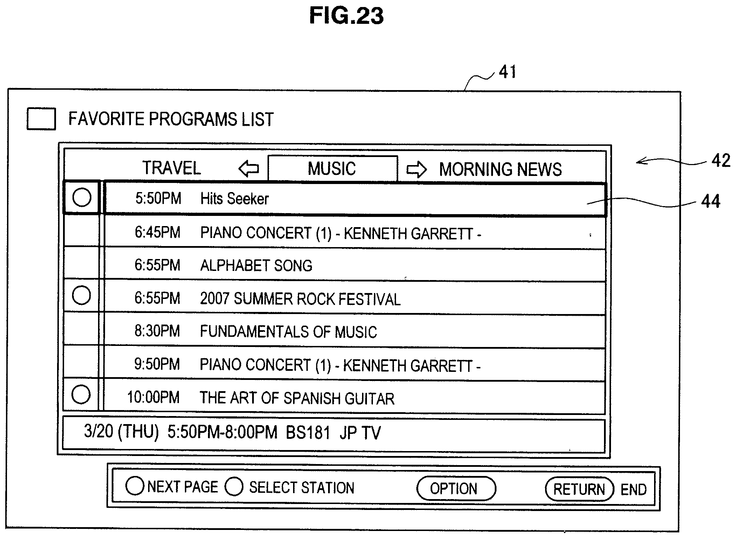

FIG. 23 is an explanatory diagram showing a background existing screen 41 on which a list of programs which are of interest to a viewer is displayed. The screen 41 displays a program list (a list of favorite programs) 42, and a plurality of programs 44 are arranged therein. According to this display method, only the programs which are of interest to a viewer are displayed. However, according to this display method, what programs are broadcast in other channels in the same time slot as the programs of interest is not displayed. Thus, the chance of a viewer watching a program that he/she might be newly interested in is lost.

On the other hand, according to the GUI including the fourth aspect of the present exemplary embodiment shown in FIG. 6, the preference value for each program is calculated by analyzing the operation by a user on a television. The area of a program can be displayed with the pop-out amount adjusted according to the calculated preference value. For example, adjustment is made such that the pop-out amount increases as the preference value becomes higher. The pop-out amount can be easily perceived, and thus a user can easily see how high the preference value of a program is.

Also, according to the example of the GUI shown in FIG. 6, a user can know what kinds of programs are broadcast in other channels in the same time slot as a program the user is interested in. As a result, the chance of watching a program that a user might be newly interested in can be increased without decreasing the chance of the user viewing a program he/she is interested in.

A fifth aspect is an example of a GUI that changes the pop-out display of an image representing a content, according to a degree of public attention to a content. According to Embodiment 5, a content to which the public is paying attention to can be pop-out displayed, similarly to FIGS. 5A, 5B and 6 of Embodiment 4 described above. The configuration of the pop-out display on a screen is as described above, and the explanation thereof will be omitted.

The degree of public attention is calculated by using a word ranking high in a search ranking, for example, that is published on the Internet, for example, or by analyzing a word frequently appearing in program information (EPG data), or the like. A program including these words is extracted and is made a target of the pop-out display.

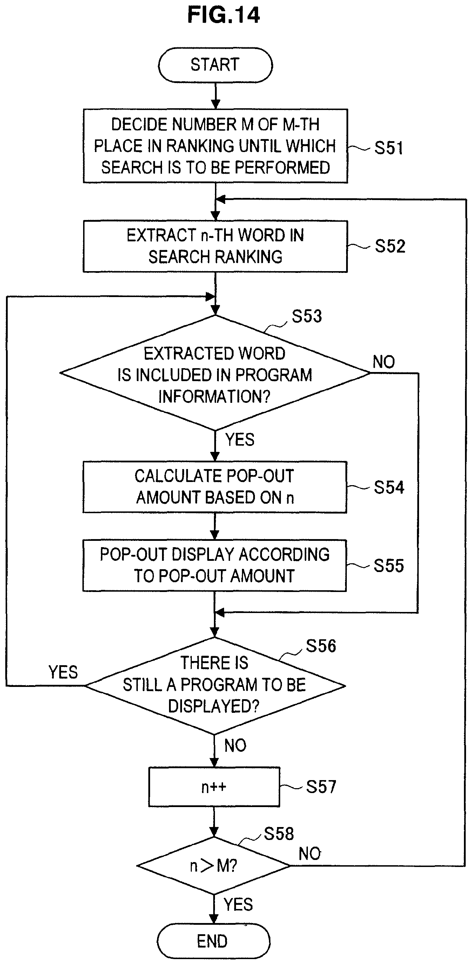

FIG. 14 is a flow chart showing an operation of changing a pop-out display of an image representing a content according to its place in a search ranking. Here, it is assumed that words until the M-th place in a search ranking, for example, that is published on the Internet, are to be searched. At this time, the number M is first decided (step S51).

Then, a word which is ranking first (n=1) in the search ranking is extracted (step S52). Then, it is determined if the word ranking first (n=1) is included in the program information of one of a plurality of programs (step S53). If the program information of the program for which determination was made in step S53 does not include the extracted word, NO in step S53, the program is not pop-out displayed, and the process proceeds to step S56. In step S56, it is determined whether there are any other programs for which determination is to be made in step S53.

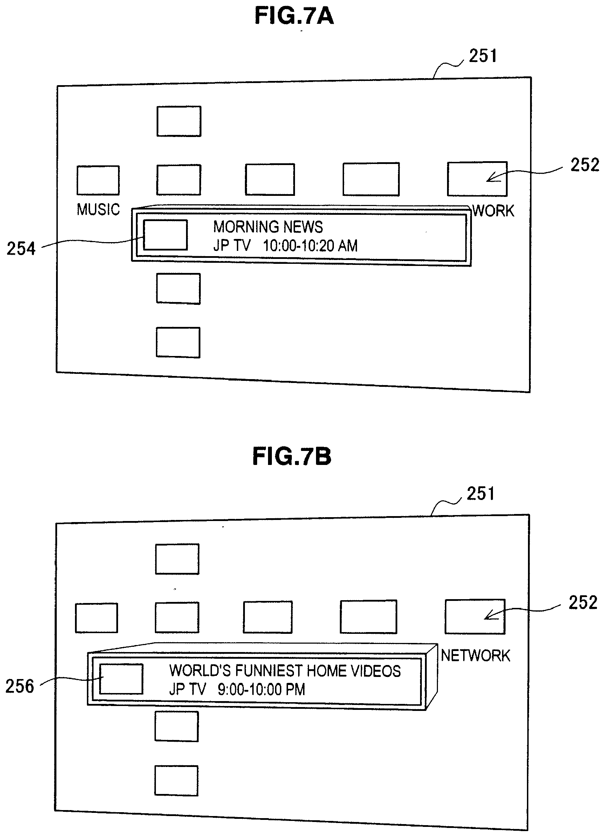

On the other hand, if the program information of the program for which determination was made in step S53 includes the extracted word, YES in step S53, a pop-out amount to which extent the area of the program on the screen is to be viewed popping out when displayed is determined according to the place (n) in the ranking (step S54). The program is pop-out displayed as with programs 254 and 256 in FIG. 7, based on the calculated pop-out amount (step S55). Then, the process proceeds to step S56, and it is determined whether there are any other programs for which determination is to be made in step S53. When it is determined in step S56 that there is another program for which determination is to be made in step S53, YES in step S56, the processes of steps S54 to S56 are repeated for such other program. When it is determined in step S56 that there are no more programs for which determination is to be made, NO in step S56, n is incremented by 1 (step S57), and the processes of steps S52 to S56 are repeated in the same manner. Then, when the processing is complete until the M-th place decided in step S51 (YES in step S58), the series of operations is ended.

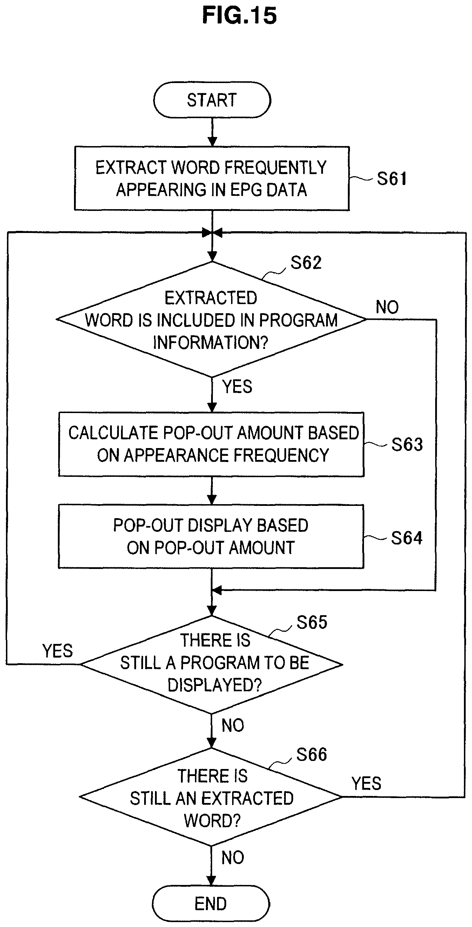

FIG. 15 is a flow chart showing an operation of changing the pop-out display of an image representing a content according to an appearance frequency of a word included in program information. First, one or more words frequently appearing in program information (EPG data) are extracted (step S61). Then, it is determined whether the extracted word is included in the program information of one of a plurality of programs (step S62). If the program information of the program for which determination was made in step S62 does not include the extracted word, NO in step S62, the program is not pop-out displayed, and the process proceeds to step S65. In step S65, it is determined whether there are any other programs for which determination is to be made in step S62.

On the other hand, if the program information of the program for which determination was made in step S62 includes the extracted word, YES in step S62, a pop-out amount to which extent the area of the program on the screen is to be viewed popping out when displayed is calculated based on the appearance frequency of the word (step S63). Then, the program is pop-out displayed as with the programs 254 and 256 in FIG. 7, based on the calculated pop-out amount (step S64). Then, the process proceeds to step S65, and it is determined whether there are any other programs for which determination is to be made in step S62. When it is determined in step S65 that there is another program for which determination is to be made in step S62, YES in step S65, the processes of steps S62 to S65 are repeated for such other program. When it is determined in step S65 that there is no other program for which determination is to be made, NO in step S65, it is determined whether there is still a word that was extracted in step S61 (step S66). When there is still an extracted word left, YES in step S66, the processes of steps S62 to S65 are repeated. When the processing is complete for all the extracted words, the series of operations is ended.

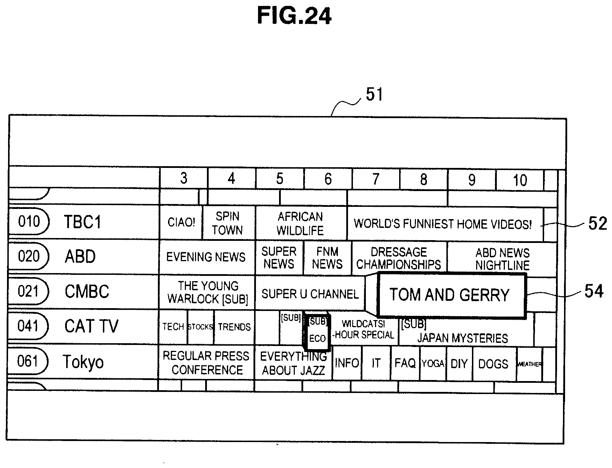

FIG. 24 is an explanatory diagram showing a screen 51 on which a background existing program guide 52 is displayed. The screen 51 displays a program 54 that is drawing public attention on a two-dimensional plane. However, although the area of the program 54 is expressed two-dimensionally as if it is in three dimensions, it is actually drawn two-dimensionally, and thus there is a drawback that there is a part hidden by the program 54 and information in the hidden part becomes hard to see. That is, the display in FIG. 24 is a two-dimensional display that tries to appear as having three-dimensional portions; but with this display those three-dimensional appearing portions, since they are not actual stereoscopic three-dimensional images, only cover up and hide portions behind them. In this case, the screen has to be scrolled to move the screen to a position at which it is possible to see the hidden part.

On the other hand, according to the GUI including the fifth aspect of the present exemplary embodiment shown in FIGS. 5A, 5B, and 6, the degree of public attention is calculated for each program. Also, the area of a program can be displayed with the pop-out amount adjusted according to the calculated degree of attention. For example, adjustment is made such that the pop-out amount increases as the degree of attention becomes higher. The pop-out amount can be easily perceived, and thus a user can easily see how high is the degree of attention to a program.

In the example of GUI shown in FIG. 6, the content displayed on the screen is displayed such that it can be viewed stereoscopically, and thus, even if a program on the program guide is displayed near a program for which the degree of attention is high and which is pop-out displayed, it can be seen without being hidden by the program for which the degree of attention is high. Also, even if it looks like there is a hidden part, a viewer can easily see that part by looking from a different angle, and thereby scrolling the screen as in the past becomes unnecessary. As described above, according to Embodiment 5, a chance of viewing a program, regardless of the type of the program, is not lost.

A sixth aspect is an example of a GUI that changes the pop-out display of an image representing a content according to the time length of the content. In the following, the content includes a broadcast program, a motion picture, music, and the like. However, in the example using FIGS. 7A and 7B, a case where the content is a broadcast program will be explained.

FIGS. 7A and 7B are explanatory diagrams showing a screen 251 on which a content selection menu 252 is displayed by applying the present exemplary embodiment. The selection menu of the screen 251 displays categories in the horizontal direction and displays data included in a selected category in the vertical direction. FIG. 7A shows a state where a broadcast program 254 included in a category "TV" is selected. FIG. 7B shows a state where a broadcast program 256 included in the category "TV" is selected. When each of the broadcast programs 254 and 256 is selected, the broadcast program can be displayed, or broadcast program data recorded in a recording/reproducing apparatus can be reproduced, or the details of the program can be displayed. Categories in the horizontal direction can include, besides "TV," "music," "network," and the like.

The broadcast program 254 is pop-out displayed in the example shown in FIG. 7A, and the broadcast program 256 is pop-out displayed in the example shown in FIG. 7B. Also, shown is a case where the length of broadcast time of the broadcast program 256 is longer compared to the length of broadcast time of the broadcast program 254. As a result, the broadcast program 256 is popped out more than the broadcast program 254. As such, when the length of broadcast time of a broadcast program is long, the selected program is greatly popped out, and on the other hand, when the length of broadcast time of a broadcast program is short, the selected program is displayed without being much popped out.

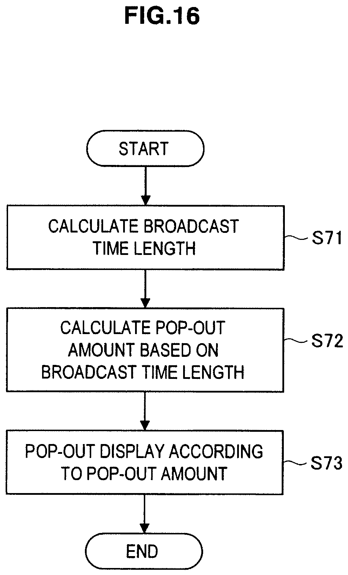

FIG. 16 is a flow chart showing an operation of changing pop-out display of an image representing a content according to the time length of the content. First, the length of broadcast time of a broadcast program is calculated based on program information relating to the broadcast program (step S71). Then, a pop-out amount to which extent the area of the broadcast program on the screen is to be viewed popping out when displayed is calculated (step S72). Next, an area of a program is pop-out displayed as with the broadcast programs 254 and 256 in FIGS. 7A and 7B, based on the pop-out amount (step S73).

As described above, FIG. 24 is an explanatory diagram showing the screen 51 on which the existing program guide 52 is displayed. The existing program guide 52 expresses the length of broadcast time of each program by the length in the horizontal direction (X-axis) on a two-dimensional plane. However, a program with a short broadcast time will have a small display space, and it is hard to perceive at first glance what kind of a program that program is.

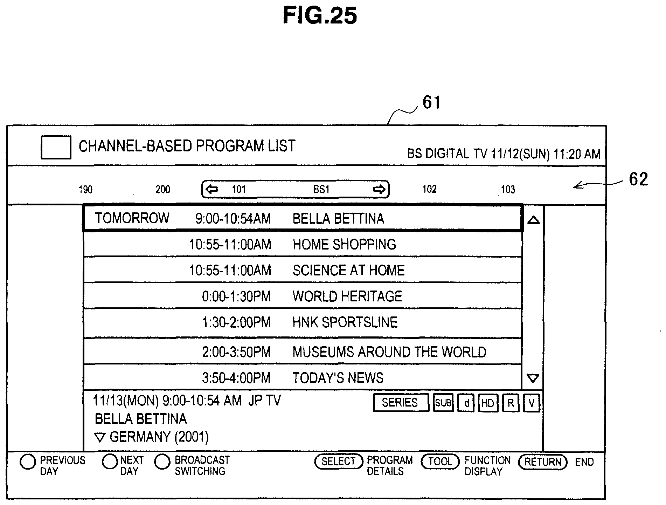

Furthermore, FIG. 25 is an explanatory diagram showing a screen 61 on which a background existing program guide 62 is displayed. The existing program guide 62 displays the title of each program and its broadcast time at the same time. However, the length of broadcast time of each program has to be calculated based on the displayed time, and it is difficult to grasp the length at first glance.

On the other hand, according to the GUI including the sixth aspect of the present exemplary embodiment, the pop-out amount is changed according to the length of broadcast time of a program. That is, the length of broadcast time of a program is analyzed, and the area of the program is displayed with the pop-out amount adjusted according to the length of time. For example, adjustment is made such that the pop-out amount increases as the length of broadcast time becomes longer. The pop-out amount can be easily perceived, and thus a user can easily see how long the broadcast time of a program is. Also, the type of a program is made easier to perceive even for a program with short broadcast time.

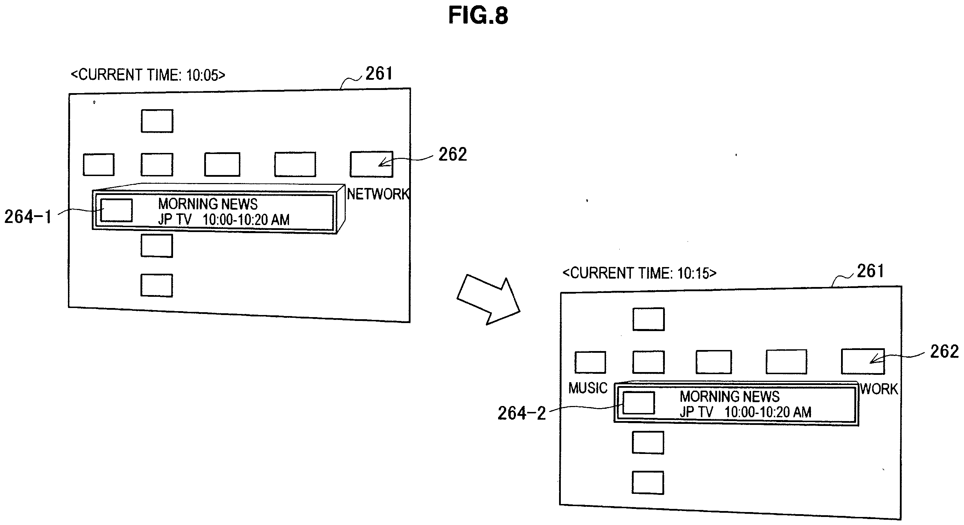

A seventh aspect is an example of a GUI that changes the pop-out display of an image representing a content according to elapsed time from the start of reproduction of a content or the start of broadcast thereof. In the following, the content includes a broadcast program, a motion picture, music, and the like. However, in the example of FIG. 8, a case where the content is a broadcast program will be explained.

FIG. 8 is an explanatory diagram showing a screen 261 on which a content selection menu 262 is displayed by applying the present exemplary embodiment. The selection menu of the screen 261 displays categories in the horizontal direction and displays data included in a selected category in the vertical direction. FIG. 8 shows a state where broadcast programs 264-1 and 264-2 included in the category "TV" are selected. When each of the broadcast programs 264-1 and 264-2 is selected, the broadcast program can be displayed, or broadcast program data recorded in a recording/reproducing apparatus can be reproduced, or the details of the program can be displayed. Categories in the horizontal direction can include, besides "TV," "music," "network," and the like.

In the examples shown in FIG. 8, the broadcast programs 264-1 and 264-2 are pop-out displayed. Also, shown is a case where the elapsed time from the start of broadcast of the broadcast program 264-2 is long compared to the elapsed time of the broadcast program 264-1. That is, the pop-out amount is changed along with the passing of the broadcast time. As shown, the area of a program is greatly popped out immediately after the start of broadcast of the broadcast program, and on the other hand, the area of a program is displayed without being much popped out near the end of broadcast of the broadcast program.

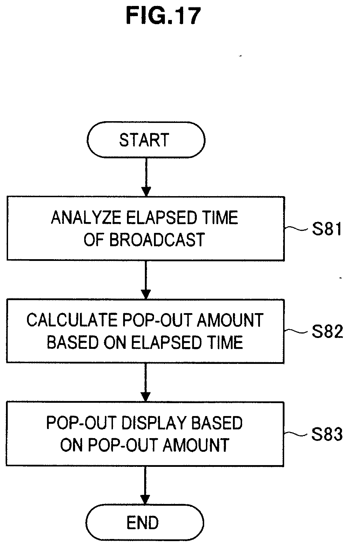

FIG. 17 is a flow chart showing an operation of changing pop-out display of an image representing a content according to the elapsed time from the start of reproduction of the content or the start of broadcast thereof. First, the elapsed time from the start of broadcast of a broadcast program is calculated based on program information relating to the broadcast program and the current time (step S81). Then, a pop-out amount to which extent the area of the broadcast program on the screen is to be viewed popping out when displayed is calculated based on the calculated elapsed time (step S82). Next, the area of a program is pop-out displayed as with the programs 264-1 and 264-2 in FIG. 8, based on the pop-out amount (step S83). At this time, the pop-out amount is changed along with the elapsed time.

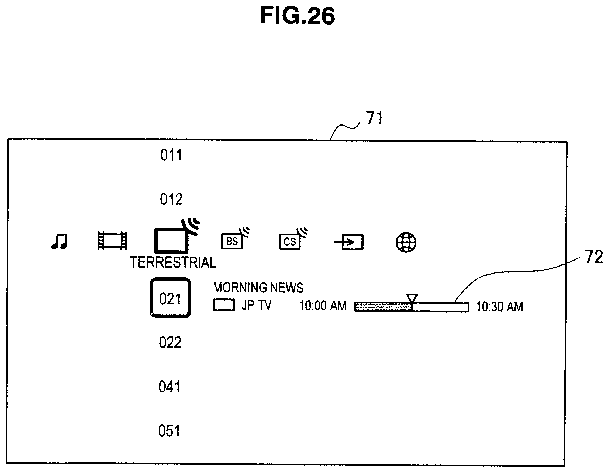

FIG. 26 is an explanatory diagram showing an existing background screen 71 on which a content selection menu is displayed. The selection menu of the screen 71 displays categories in the horizontal direction and displays data included in a selected category in the vertical direction. FIG. 26 shows a state where a broadcast program included in a category "terrestrial TV" is selected. When each broadcast program is selected, the broadcast program can be displayed, or broadcast program data recorded in a recording/reproducing apparatus can be reproduced, or the details of the program can be displayed, for example. Categories in the horizontal direction can include, besides "terrestrial TV," "music," "video," "BSTV," "CSTV," "network," and the like. Furthermore, on the screen 71, the time elapsed until the present time in a program that is being broadcast is displayed by using an indicator 72 expressed in an X-axis direction on a two-dimensional plane. However, this display method has a drawback that an area has to be allocated for displaying the indicator on the screen.

On the other hand, according to the GUI including the seventh aspect of the present exemplary embodiment, the pop-out amount is changed according to the elapsed time of a program. That is, the elapsed time of a program is analyzed, and the area of the program is displayed with the pop-out amount adjusted according to the amount of the elapsed time. For example, adjustment is made such that the pop-out amount decreases as the elapsed time becomes longer. The pop-out amount can be easily perceived, and thus a user can easily see the amount of elapsed time of a program. Also, an area for displaying an indicator for indicating the elapsed time does not have to be allocated, and thus a screen area for displaying a GUI can be made large.

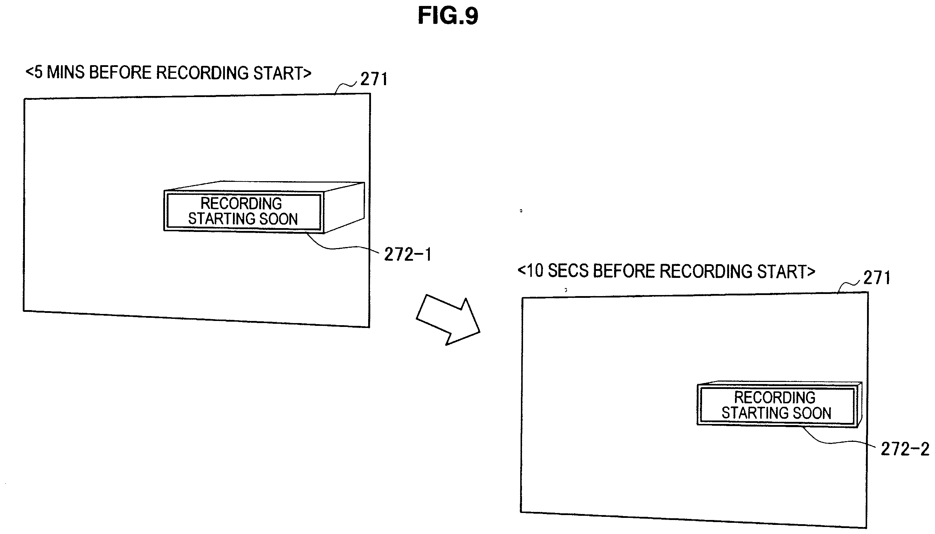

An eighth aspect is an example of a GUI that changes the pop-out display of an image indicating the start of recording of a recording target content according to the time until the start of recording of the recording target content. In the following, the content includes a broadcast program, a motion picture, music, and the like. However, in the example of FIG. 9, a case where the content is a broadcast program will be explained.

FIG. 9 is an explanatory diagram showing a screen 271 on which a clip message 272-1 or 272-2 is displayed by applying the present exemplary embodiment. The screen 271 displays clip messages 272-1 and 272-2 that read "RECORDING STARTING SOON."

In the example shown in FIG. 9, the messages 272-1 and 272-2 are pop-out displayed. Also, shown is a case where the time until the start of a recording target program is longer for a case where the message 272-1 is displayed than for a case where the message 272-2 is displayed. That is, the pop-out amount is changed according to the time until the start of recording. As such, when there is much time until the start of recording, the area of a program is greatly popped out, and on the other hand, when the recording is starting soon, the area of the program is displayed without being much popped out.

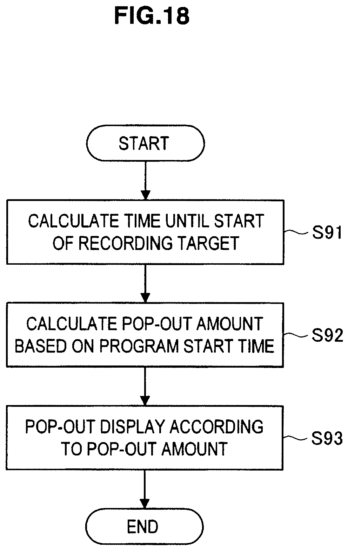

FIG. 18 is a flow chart showing an operation of changing pop-out display of an image indicating the start of recording of a content according to the time until the start of recoding of a recording target content. First, the time until the start of a recording target program is calculated based on the start time of the recording target program and the current time (step S91). Then, a pop-out amount to which extent the area of the broadcast program on the screen is to be viewed popping out when displayed is calculated based on the calculated time (step S92). Next, a message is pop-out displayed n minutes before the recording start time, based on the pop-out amount. Then, it is displayed with the pop-out amount being adjusted along with the passing of time (step S93).

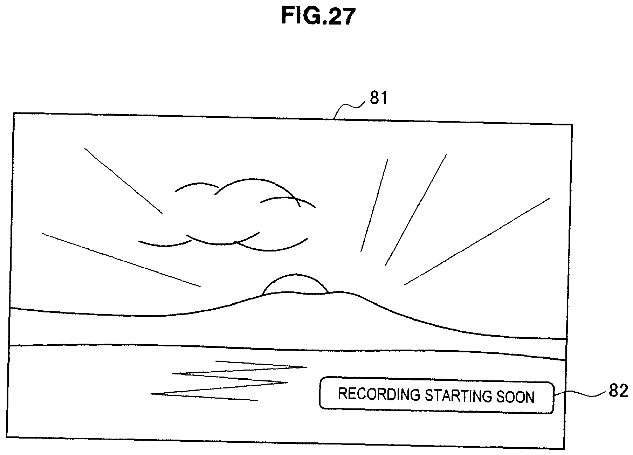

FIG. 27 is an explanatory diagram showing an existing background screen 81 on which a clip message 82 is displayed. The screen 81 displays the clip message that reads "RECORDING STARTING SOON" n minutes before the start of the recording target program. However, there is a drawback that it is unknown how much time there actually is until the program starts.

On the other hand, according to the GUI including the eighth aspect of the present exemplary embodiment, a message is pop-out displayed n minutes before the recording start time based on the pop-out amount. The message is displayed with the pop-out amount adjusted along with the passing of time. For example, the pop-out amount is made less as it nears the start of the program. The pop-out amount can be easily perceived, and thus a user can easily see how much time there is until the start of the program.

It should be understood by those skilled in the art that various modifications, combinations, sub-combinations and alterations may occur depending on design requirements and other factors insofar as they are within the scope of the appended claims or the equivalents thereof.

The exemplary embodiment herein described can include any or all of the aspects described above, and any combination of those aspects.

## Claims

1. A display control device for controlling a display of a graphical user interface,
the graphical user interface comprising a plurality of user selectable and user non-selectable items, the items being each displayed on a portion of the graphical user interface on a screen of a display panel (120),
the display control device (100) comprising:
an image generation unit (102) configured to generate an image as a stereoscopic image to be displayed on the screen of the display panel (120) based on data relating to a picture, wherein the data relating to a picture includes data relating to the graphical user interface;
**characterized in**
the display control device (100) further comprising
a pop-out amount unit (106, 108) configured to calculate a pop-out amount of the stereoscopic image, the pop-out amount indicating a perceived distance that at least the portion of the graphical user interface in the stereoscopic image pops out into space from the screen of the display panel (120)
based on a specific parameter of the portion of the graphical user interface,
wherein the specific parameter is set based on whether the portion of the graphical user interface is a user selectable portion (22, 212) or a user non-selectable portion, and
the pop-out amount unit (106) is configured to calculate the pop-out amount for the user selectable portion (212, 22) to be greater than for a user non-selectable portion (212, 23); and
a display controller (110) configured to control display of the stereoscopic image based on the calculated pop-out amount on the display panel (120).

2. The display control device according to claim 1,
wherein the graphical user interface is an electronic program guide (EPG).

3. The display control device according to claim 1,
wherein the specific parameter is set based on whether the portion (202, 204) of the graphical user interface is selected by a user input, and the pop-out amount unit (106) is configured to calculate a pop-out amount for the selected portion (204) of the GUI to be greater than for a non-selected portion (202).

4. The display control device according to claim 1,
wherein the stereoscopic image displays a plurality of file folders (224-1, 224-2), wherein the specific parameter is set based on a number of data pieces within the file folders (224-1, 224-2), and the pop-out amount unit (106) is configured to calculate the pop-out amount based on the number of data pieces in the respective file folders (224-1, 224-2).

5. The display control device according to claim 1,
wherein the specific parameter is set based on a degree of interest in the portion (234, 236, 244) of the graphical user interface, wherein the degree of interest is a preference value, and the pop-out amount unit (106) is configured to calculate the pop-out amount corresponding to the degree of interest in the portion (234, 236, 244) of the GUI.

6. The display control device according to claim 1,
wherein the specific parameter is set based on a length of time remaining in a content selectable in the graphical user interface, and the pop-out amount unit (106) is configured to calculate the pop-out amount corresponding to the length of the time remaining in the content.

7. The display control device according to claim 1,
wherein the specific parameter is set based on an elapsed time from a start of reproduction of a content (264-1, 264-2) selectable in the graphical user interface, and the pop-out amount unit (106) is configured to calculate the pop-out amount corresponding to the elapsed time from the start of reproduction of the content (261-1, 264-2).

8. The display control device according to claim 1,
wherein the specific parameter is set based on a time until a start of recording of a recording target (271-1, 271-2) in the graphical user interface, and the pop-out amount unit (106) is configured to calculate the pop-out amount corresponding to the time until the start of recording of the recording target (271-1, 271-2) in the GUI.

9. A display control method for controlling a display of a graphical user interface,
the graphical user interface comprising a plurality of user selectable and user non-selectable items, the items being each displayed on a portion of the graphical user interface on a screen of a display panel (120), the display control method comprising:
generating an image as stereoscopic image to be displayed on the screen of the display panel based on data relating to a picture, wherein the data relating to a picture includes data relating to the graphical user interface (120)(S11);
**characterized in**
the display control method further comprising
calculating a pop-out amount of the stereoscopic image, the pop-out amount indicating a perceived distance that at least the portion of the graphical user interface in the stereoscopic image pops out into space from the screen of the display panel (120)(S12) based on a specific parameter of the portion of the graphical user interface ;
wherein the specific parameter is set based on whether the portion of the graphical user interface is a user selectable portion or a user non-selectable portion, and
the step of calculating a pop-out amount calculates a pop-out amount for a user selectable portion (212, 22)to be greater than for a user non-selectable portion (212, 23) (S22); and
controlling display of the stereoscopic image based on the calculated pop-out amount on the display panel (120) (S13).

10. The display control method according to claim 9,
wherein the GUI is an electronic program guide (EPG).

11. The display control method according to claim 9,
wherein the specific parameter is set based on whether the portion (202, 204) of the graphical user interface is selected by a user input, and the calculating a pop-out amount calculates a pop-out amount for the selected portion (204) of the GUI to be greater than for a non-selected portion (202)(S12).

12. The display control method according to claim 9,
wherein the stereoscopic image displays a plurality of file folders, and the specific parameter is set based on a number of data pieces within the file folders, and the calculating a pop-out amount calculates the pop-out amount based on the number of data pieces in the respective file folders (S32).

13. The display control method according to claim 9,
wherein the specific parameter is set based on a degree of interest in the portion of the graphical user interface, wherein the degree of interest is a preference value, and the calculating a pop-out amount calculates the pop-out amount corresponding to the degree of interest in the portion of the graphical user interface (S42).

## Patentansprüche

1. Anzeigesteuervorrichtung zum Steuern einer Anzeige einer grafischen Benutzerschnittstelle,
wobei die grafische Benutzerschnittstelle mehrere durch den Benutzer wählbare und durch den Benutzer nicht wählbare Objekte umfasst, wobei die Objekte jeweils auf einem Abschnitt der grafischen Benutzerschnittstelle auf einem Bildschirm einer Anzeigetafel (120) angezeigt werden,
wobei die Anzeigesteuervorrichtung (100) umfasst:
eine Abbilderzeugungseinheit (102), die dafür konfiguriert ist, auf der Grundlage von Daten, die sich auf ein Bild beziehen, ein Abbild als ein stereoskopisches Abbild, das auf dem Bildschirm der Anzeigetafel (120) angezeigt werden soll, zu erzeugen, wobei die Daten, die sich auf ein Bild beziehen, Daten enthalten, die sich auf die grafische Benutzerschnittstelle beziehen;
**dadurch gekennzeichnet, dass**
die Anzeigesteuervorrichtung (100) ferner umfasst:
eine Einheit (106, 108) für den Betrag des Vorspringens, die dafür konfiguriert ist, auf der Grundlage eines spezifischen Parameters des Abschnitts der grafischen Benutzerschnittstelle einen Betrag des Vorspringens des stereoskopischen Abbilds zu berechnen, wobei der Betrag des Vorspringens eine wahrgenommene Entfernung angibt, die mindestens der Abschnitt der grafischen Benutzerschnittstelle in dem stereoskopischen Abbild von dem Bildschirm der Anzeigetafel (120) in den Raum vorspringt,
wobei der spezifische Parameter aufgrund dessen eingestellt wird, ob der Abschnitt der grafischen Benutzerschnittstelle ein durch den Benutzer wählbarer Abschnitt (22, 212) oder ein durch den Benutzer nicht wählbarer Abschnitt ist, und wobei die Einheit (106) für den Betrag des Vorspringens dafür konfiguriert ist, den Betrag des Vorspringens für den durch den Benutzer wählbaren Abschnitt (212, 22) in der Weise zu berechnen, dass er größer als für einen durch den Benutzer nicht wählbaren Abschnitt (212, 23) ist; und
einen Anzeigecontroller (110), der dafür konfiguriert ist, die Anzeige des stereoskopischen Abbilds auf der Grundlage des berechneten Betrags des Vorspringens auf der Anzeigetafel (120) zu steuern.

2. Anzeigesteuervorrichtung nach Anspruch 1,
wobei die grafische Benutzerschnittstelle ein elektronischer Programmführer (EPG) ist.

3. Anzeigesteuervorrichtung nach Anspruch 1,
wobei der spezifische Parameter aufgrund dessen eingestellt wird, ob der Abschnitt (202, 204) der grafischen Benutzerschnittstelle durch eine Benutzereingabe ausgewählt wird, und wobei die Einheit (106) für den Betrag des Vorspringens dafür konfiguriert ist, einen Betrag des Vorspringens für den ausgewählten Abschnitt (204) der GUI in der Weise zu berechnen, dass er größer als für einen nicht ausgewählten Abschnitt (202) ist.

4. Anzeigesteuervorrichtung nach Anspruch 1,
wobei das stereoskopische Abbild mehrere Dateiordner (224-1, 224-2) anzeigt, wobei der spezifische Parameter auf der Grundlage einer Anzahl von Datenelementen in den Dateiordnern (224-1, 224-2) eingestellt wird, und wobei die Einheit (106) für den Betrag des Vorspringens dafür konfiguriert ist, den Betrag des Vorspringens auf der Grundlage der Anzahl der Datenelemente in den jeweiligen Dateiordnern (224-1, 224-2) zu berechnen.

5. Anzeigesteuervorrichtung nach Anspruch 1,
wobei der spezifische Parameter auf der Grundlage eines Grads des Interesses an dem Abschnitt (234, 236, 244) der grafischen Benutzerschnittstelle eingestellt wird, wobei der Grad des Interesses ein Präferenzwert ist, und wobei die Einheit (106) für den Betrag des Vorspringens dafür konfiguriert ist, den Betrag des Vorspringens entsprechend dem Grad des Interesses an dem Abschnitt (234, 236, 244) der GUI zu berechnen.

6. Anzeigesteuervorrichtung nach Anspruch 1,
wobei der spezifische Parameter auf der Grundlage einer Zeitdauer eingestellt wird, die in einem in der grafischen Benutzerschnittstelle wählbaren Inhalt verbleibt, und wobei die Einheit (106) für den Betrag des Vorspringens dafür konfiguriert ist, den Betrag des Vorspringens entsprechend der Dauer der in dem Inhalt verbleibenden Zeit zu berechnen.

7. Anzeigesteuervorrichtung nach Anspruch 1,
wobei der spezifische Parameter auf der Grundlage einer verstrichenen Zeit seit einem Beginn der Wiedergabe eines Inhalts (264-1, 264-2), der in der grafischen Benutzerschnittstelle wählbar ist, eingestellt wird, und wobei die Einheit (106) für den Betrag des Vorspringens dafür konfiguriert ist, den Betrag des Vorspringens entsprechend der verstrichenen Zeit seit dem Beginn der Wiedergabe des Inhalts (261-1, 264-2) zu berechnen.

8. Anzeigesteuervorrichtung nach Anspruch 1,
wobei der spezifische Parameter auf der Grundlage einer Zeit bis zu einem Beginn der Aufzeichnung eines Aufzeichnungsziels (271-1, 271-2) in der grafischen Benutzerschnittstelle eingestellt wird, und wobei die Einheit (106) für den Betrag des Vorspringens dafür konfiguriert ist, den Betrag des Vorspringens entsprechend der Zeit bis zum Beginn der Aufzeichnung des Aufzeichnungsziels (271-1, 271-2) in der GUI zu berechnen.

9. Anzeigesteuerverfahren zum Steuern einer Anzeige einer grafischen Benutzerschnittstelle,
wobei die grafische Benutzerschnittstelle mehrere durch den Benutzer wählbare und durch den Benutzer nicht wählbare Objekte umfasst, wobei die Objekte jeweils auf einem Abschnitt der grafischen Benutzerschnittstelle auf einem Bildschirm einer Anzeigetafel (120) angezeigt werden, wobei das Anzeigesteuerverfahren umfasst:
Erzeugen eines Abbilds als ein stereoskopisches Abbild, das auf dem Bildschirm der Anzeigetafel angezeigt werden soll, auf der Grundlage von Daten, die sich auf ein Bild beziehen, wobei die Daten, die sich auf ein Bild beziehen, Daten enthalten,
die sich auf die grafische Benutzerschnittstelle (120) beziehen (S11);
**dadurch gekennzeichnet, dass**
das Anzeigesteuerverfahren ferner umfasst:
Berechnen eines Betrags des Vorspringens des stereoskopischen Abbilds, wobei der Betrag des Vorspringens eine wahrgenommene Entfernung angibt, die mindestens der Abschnitt der grafischen Benutzerschnittstelle in dem stereoskopischen Abbild von dem Bildschirm der Anzeigetafel (120) in den Raum vorspringt (S12), auf der Grundlage eines spezifischen Parameters des Abschnitts der grafischen Benutzerschnittstelle;
wobei der spezifische Parameter aufgrund dessen eingestellt wird, ob der Abschnitt der grafischen Benutzerschnittstelle ein durch den Benutzer wählbarer Abschnitt oder ein durch den Benutzer nicht wählbarer Abschnitt ist, und
der Schritt des Berechnens eines Betrags des Vorspringens einen Betrag des Vorspringens für einen durch den Benutzer wählbaren Abschnitt (212, 22) in der Weise berechnet, dass er größer als für einen durch den Benutzer nicht wählbaren Abschnitt (212, 23) ist (S22); und
Steuern der Anzeige des stereoskopischen Abbilds auf der Grundlage des berechneten Betrags des Vorspringens auf der Anzeigetafel (120) (S13).

10. Anzeigesteuerverfahren nach Anspruch 9,
wobei die GUI ein elektronischer Programmführer (EPG) ist.

11. Anzeigesteuerverfahren nach Anspruch 9,
wobei der spezifische Parameter aufgrund dessen eingestellt wird, ob der Abschnitt (202, 204) der grafischen Benutzerschnittstelle durch eine Benutzereingabe ausgewählt wird, und wobei das Berechnen eines Betrags des Vorspringens einen Betrag des Vorspringens für den ausgewählten Abschnitt (204) der GUI in der Weise berechnet, dass er größer als für einen nicht ausgewählten Abschnitt (202) ist (S12).

12. Anzeigesteuerverfahren nach Anspruch 9,
wobei das stereoskopische Abbild mehrere Dateiordner anzeigt, und wobei der spezifische Parameter auf der Grundlage einer Anzahl von Datenelementen in den Dateiordnern eingestellt wird, und wobei das Berechnen eines Betrags des Vorspringens den Betrag des Vorspringens auf der Grundlage der Anzahl der Datenelemente in den jeweiligen Dateiordnern berechnet (S32).

13. Anzeigesteuerverfahren nach Anspruch 9,
wobei der spezifische Parameter auf der Grundlage eines Grads des Interesses an dem Abschnitt der grafischen Benutzerschnittstelle eingestellt wird, wobei der Grad des Interesses ein Präferenzwert ist, und wobei das Berechnen eines Betrags des Vorspringens den Betrag des Vorspringens entsprechend dem Grad des Interesses an dem Abschnitt der grafischen Benutzerschnittstelle berechnet (S42).

## Revendications

1. Dispositif de contrôle d'affichage pour contrôler un affichage d'une interface utilisateur graphique,
l'interface utilisateur graphique comprenant une pluralité d'éléments sélectionnables par l'utilisateur et non sélectionnables par l'utilisateur, chaque élément étant affiché sur une partie de l'interface utilisateur graphique sur un écran d'un panneau d'affichage (120),
le dispositif de contrôle d'affichage (100) comprenant :
une unité de génération d'image (102) configurée pour générer une image sous la forme d'une image stéréoscopique à afficher sur l'écran du panneau d'affichage (120) en fonction des données relatives à une image, où les données relatives à une image incluent les données relatives à l'interface utilisateur graphique ;
**caractérisé en ce que**
le dispositif de contrôle d'image (100) comprend en outre
une unité de calcul de valeur de jaillissement (106, 108) configurée pour calculer une valeur de jaillissement de l'image stéréoscopique, la valeur de jaillissement indiquant une distance perçue selon laquelle au moins la partie de l'interface utilisateur graphique de l'image stéréoscopique jaillit dans l'espace à partir de l'écran du panneau d'affichage (120) en fonction d'un paramètre spécifique de la partie de l'interface utilisateur graphique,
dans lequel le paramètre spécifique est défini selon que la partie de l'interface utilisateur graphique est une partie sélectionnable par l'utilisateur (22, 212) ou une partie non sélectionnable par l'utilisateur, et
l'unité de calcul de valeur de jaillissement (106) est configurée pour calculer la valeur de jaillissement pour la partie sélectionnable par l'utilisateur (212, 22) afin qu'elle soit supérieure à celle d'une partie non sélectionnable par l'utilisateur (212, 23) ; et
un contrôleur d'affichage (110) configuré pour contrôler l'affichage de l'image stéréoscopique en fonction de la valeur de jaillissement calculée sur le panneau d'affichage (120).

2. Dispositif de contrôle d'affichage selon la revendication 1, dans lequel l'interface utilisateur graphique est un guide de programmes électronique (EPG).

3. Dispositif de contrôle d'affichage selon la revendication 1, dans lequel le paramètre spécifique est défini selon que la partie (202, 204) de l'interface utilisateur graphique est sélectionnée par une entrée utilisateur, et l'unité de calcul de valeur de jaillissement (106) est configurée pour calculer une valeur de jaillissement pour la partie sélectionnée (204) de l'IUG afin qu'elle soit supérieure à celle d'une partie non sélectionnée (202).

4. Dispositif de contrôle d'affichage selon la revendication 1, dans lequel l'image stéréoscopique affiche une pluralité de dossiers de fichiers (224-1, 224-2), dans lequel le paramètre spécifique est défini en fonction d'un nombre d'éléments de données dans les dossiers de fichiers (224-1, 224-2), et l'unité de calcul de valeur de jaillissement (106) est configurée pour calculer la valeur de jaillissement en fonction du nombre d'éléments de données dans les dossiers de fichiers respectifs (224-1, 224-2).

5. Dispositif de contrôle d'affichage selon la revendication 1, dans lequel le paramètre spécifique est défini en fonction d'un degré d'intérêt pour la partie (234, 236, 244) de l'interface utilisateur graphique, dans lequel le degré d'intérêt est une valeur de préférence, et l'unité calcul de valeur de jaillissement (106) est configurée pour calculer la valeur de jaillissement correspondant au degré d'intérêt pour la partie (234, 236, 244) de l'IUG.

6. Dispositif de contrôle d'affichage selon la revendication 1, dans lequel le paramètre spécifique est défini en fonction d'une durée restante dans un contenu sélectionnable dans l'interface utilisateur graphique, et l'unité de calcul de valeur de jaillissement (106) est configurée pour calculer la valeur de jaillissement correspondant à la durée restante dans le contenu.

7. Dispositif de contrôle d'affichage selon la revendication 1, dans lequel le paramètre spécifique est défini en fonction d'une durée écoulée à partir du début de la reproduction d'un contenu (264-1, 264-2) sélectionnable dans l'interface utilisateur graphique, et l'unité de calcul de valeur de jaillissement (106) est configurée pour calculer la valeur de jaillissement correspondant à la durée écoulée depuis le début de la reproduction du contenu (261-1, 264-2).

8. Dispositif de contrôle d'affichage selon la revendication 1, dans lequel le paramètre spécifique est défini en fonction d'une durée jusqu'au début de l'enregistrement d'une cible d'enregistrement (271-1, 271-2) dans l'interface utilisateur graphique, et l'unité de calcul de valeur de jaillissement (106) est configurée pour calculer la valeur de jaillissement correspondant à la durée jusqu'au début de l'enregistrement de la cible d'enregistrement (271-1, 271-2) dans l'IUG.

9. Procédé de contrôle d'affichage pour contrôler un affichage d'une interface utilisateur graphique,
l'interface utilisateur graphique comprenant une pluralité d'éléments sélectionnables par l'utilisateur et non sélectionnables par l'utilisateur, chaque élément étant affiché sur une partie de l'interface utilisateur graphique sur un écran d'un panneau d'affichage (120), le procédé de contrôle d'affichage comprenant :
la génération d'une image sous la forme d'une image stéréoscopique à afficher sur l'écran du panneau d'affichage en fonction des données relatives à une image, où les données relatives à une image incluent les données relatives à l'interface utilisateur graphique (120) (S11) ;
**caractérisé en ce que**
le procédé de contrôle d'affichage comprend en outre le calcul d'une valeur de jaillissement de l'image stéréoscopique, la valeur de jaillissement indiquant une distance perçue selon laquelle au moins la partie de l'interface utilisateur graphique de l'image stéréoscopique jaillit dans l'espace à partir de l'écran du panneau d'affichage (120) (S12) en fonction d'un paramètre spécifique de la partie de l'interface utilisateur graphique ;
dans lequel le paramètre spécifique est défini selon que la partie de l'interface utilisateur graphique est une partie sélectionnable par l'utilisateur ou une partie non sélectionnable par l'utilisateur, et
l'étape de calcul d'une valeur de jaillissement calcule une valeur de jaillissement pour une partie sélectionnable par l'utilisateur (212, 22) afin qu'elle soit supérieure à celle d'une partie non sélectionnable par l'utilisateur (212, 23) (S22) ; et
le contrôle de l'affichage de l'image stéréoscopique est basé sur la valeur de jaillissement calculée sur le panneau d'affichage (120) (S13).

10. Procédé de contrôle d'affichage selon la revendication 9, dans lequel l'interface utilisateur graphique est un guide de programmes électronique (EPG).

11. Procédé de contrôle d'affichage selon la revendication 9, dans lequel le paramètre spécifique est défini selon que la partie (202, 204) de l'interface utilisateur graphique est sélectionnée par une entrée utilisateur, et le calcul d'une valeur de jaillissement calcule une valeur de jaillissement pour la partie sélectionnée (204) de l'IUG afin qu'elle soit supérieure à celle d'une partie non sélectionnée (202) (S 12).

12. Procédé de contrôle d'affichage selon la revendication 9, dans lequel l'image stéréoscopique affiche une pluralité de dossiers de fichiers, et le paramètre spécifique est défini en fonction d'un nombre d'éléments de données dans les dossiers de fichiers, et le calcul d'une valeur de jaillissement calcule la valeur de jaillissement en fonction du nombre d'éléments de données dans les dossiers de fichiers respectifs (S32).

13. Procédé de contrôle d'affichage selon la revendication 9, dans lequel le paramètre spécifique est défini en fonction d'un degré d'intérêt pour la partie de l'interface utilisateur graphique, dans lequel le degré d'intérêt est une valeur de préférence, et le calcul d'une valeur de jaillissement calcule la valeur de jaillissement correspondant au degré d'intérêt pour la partie de l'interface utilisateur graphique (S42).
